# EUROPÄISCHE PATENTSCHRIFT

(11) **EP 1 412 123 B1**
(45) Veröffentlichungstag und Bekanntmachung des Hinweises auf die Patenterteilung: **20.09.2006**
(21) Anmeldenummer: 02760259.8
(22) Anmeldetag: 22.07.2002
(51) Int. Cl.: B23K 9/20, B23K 11/00

(54) **VERFAHREN ZUM KURZZEIT-LICHTBOGENSCHWEISSEN UND KURZZEIT-LICHTBOGENSCHWEISSSYSTEM**
METHOD FOR SHORT-CYCLE ARC WELDING AND A SHORT-CYCLE ARC WELDING SYSTEM
PROCEDE DE SOUDAGE A L'ARC A COURTE DUREE ET SYSTEME DE SOUDAGE A L'ARC A COURTE DUREE

(30) Priorität: 23.07.2001 DE 10136991
(43) Veröffentlichungstag der Anmeldung: 28.04.2004
(73) Patentinhaber: Newfrey LLC, Newark, Delaware 19711 (US)
(72) Erfinder: SCHMIDT, Wolfgang, 35447 Reiskirchen (DE); FRIEDRICH, Arne, 35435 Wettenberg (DE); SCHMITT, Klaus, Gisbert, 35390 Giessen (DE)
(74) Vertreter: Haar, Lucas Heinz Jörn
(86) Internationale Anmeldenummer: PCT/EP2002/008130
(87) Internationale Veröffentlichungsnummer: WO 2003/011510

(56) Entgegenhaltungen:
- EP-A- 0 488 518
- DE-A- 3 432 963
- DE-A- 4 236 527
- DE-A- 19 828 986
- DE-U- 20 003 132
- DE-U- 29 521 601
- US-A- 5 317 123

## Beschreibung

Die vorliegende Erfindung betrifft ein Verfahren zum Kurzzeit-Lichtbogenschweißen von Elementen, wie z.B. Metallbolzen, auf Bauteile, wie z.B. Metallbleche, bei dem ein Element im Rahmen eines Schweißvorganges zunächst gegenüber dem Bauteil angehoben wird, ein Schweißlichtbogen zwischen Element und Bauteil gebildet wird und das Element wieder abgesenkt wird, wobei die Hubhöhe des Elementes gegenüber dem Bauteil wenigstens in einem zeitlichen Abschnitt zwischen Anheben und Absenken des Bauteiles erfaßt wird (siehe EP-A-0 488 518) und ein Kurzzeit-Lichtbogenschweisssystem gemäß dem Oberbegriff des Anspruch 6 (siehe auch EP-A-0 488 518).

Die vorliegende Erfindung betrifft ferner ein Kurzzeit-Lichtbogenschweißsystem zum Schweißen von Elementen, wie z.B. Metallbolzen, auf Bauteile, wie z.B. Metallbleche, mit einer Schweißeinrichtung, die ein Element im Rahmen eines Schweißvorganges zunächst gegenüber dem Bauteil anhebt und wieder absenkt, einer Hubhöhenerfassungseinrichtung zum Erfassen der Hubhöhe des Elementes gegenüber dem Bauteil wenigstens in einem zeitlichen Abschnitt zwischen Anheben und Absenken des Bauteiles, einer Leistungsversorgungseinrichtung, die Leistung zum Bilden eines Lichtbogens zwischen dem Bauteil und dem angehobenen Element bereitstellt, und einer Steuereinrichtung, die die Schweißeinrichtung zum Anheben und Absenken des Elements ansteuert.

Dieses Verfahren zum Kurzzeit-Lichtbogenschweißen bzw. dieses Kurzzeit-Lichtbogenschweißsystem sind auch unter dem Begriff "Bolzenschweißen" allgemein bekannt, z.B. aus einem Prospekt "Die neue TUCKER-Technologie. Bolzenschweißen mit System!", veröffentlicht von "Emhart TUCKER", September 1999.

Die Technologie des Bolzenschweißens wird insbesondere, jedoch nicht ausschließlich in der Fahrzeugtechnik eingesetzt.

Mit dieser Technologie können Bolzen mit oder ohne Gewinde, Muttern, Ösen und andere Elemente auf Karosseriebleche aufgeschweißt werden. Die Elemente dienen dann in der Regel als Halteanker zum Befestigen von beispielsweise Innenraumausstattungen an der Fahrzeugkarosserie.

Bei dem oben genannten Bolzenschweißen gemäß TUCKER wird zunächst ein Element in einen Schweißkopf eingesetzt. Dies kann durch eine automatische Zuführeinrichtung, beispielsweise mittels Druckluft erfolgen. Mit dem Schweißkopf wird nun das Element an der geeigneten Stelle an dem Bauteil positioniert. Als nächstes wird ein Vorschweißstrom eingeschaltet, der durch den Bolzen und das Bauteil hindurchfließt. Dann wird das Element gegenüber dem Bauteil angehoben. Es bildet sich ein Lichtbogen. Der Lichtbogenstrom ist so gewählt, daß zunächst Verunreinigungen, Oberflächenbeschichtungen wie Zink, Öl bzw. Trockenschmierstoffe etc. abgebrannt werden. Anschließend wird auf den Schweißstrom umgeschaltet. Durch den hohen Schweißstrom schmelzen die einander gegenüberliegenden Stirnseiten von Element und Bauteil an. Anschließend wird das Element wieder auf das Bauteil abgesenkt, so daß sich die wechselseitigen Schmelzen vermischen. Mit dem Erreichen des Bauelementes und dem Kurzschluß des Lichtbogens wird der Schweißstrom abgeschaltet. Die Schmelze erstarrt, die Schweißverbindung ist erfolgt.

Bei einer allgemein bekannten Ausführungsform erfolgt das Anheben und Absenken des Elementes gegenüber dem Bauteil mittels eines Elektromagneten bzw. mittels einer Feder. Zum Anheben wird der Elektromagnet angesteuert, gegen die Kraft einer Druckfeder. Zum Absenken wird der Elektromagnet abgeschaltet und die in der Feder gespeicherte Energie drückt das Element gegen das Bauteil. Bei einer neueren Ausführungsform erfolgt das Anheben und Absenken des Elementes gegenüber dem Bauteil durch einen Elektromotor, insbesondere durch einen Linearmotor. Der Linearmotor ist in der Lage, mit hoher Dynamik ein vorgegebenes Hubprofil über der Zeit anzufahren. Um zu erreichen, daß sich das einmal eingestellte Hubprofil über der Zeit nicht im Laufe des Betriebs verändert, ist es bekannt, den Weg des Linearmotors zu messen und zur Bildung einer geschlossenen Regelschleife rückzuführen.

Aus EP-A-0 488 518 ist eine Vorrichtung zum Kurzzeit-Lichtbogenschweißen bekannt, bei welchem das Absenken des Elements und das Andrücken des Elements an das Bauteil durch eine Feder und das Abheben des Elements von dem Bauteil durch einen Elektromagneten bewirkt wird. Der Abhebehub des Elektromagneten ist hierbei mit Hilfe eines einstellbaren Anschlags auf einen vorgegebenen Wert einstellbar. Der Abstand zwischen dem Anschlag und dem Elektromagneten und damit die Hubhöhe des Elements beim Abheben wird jedoch durch Längenunterschiede des Elements und Unebenheiten des Bauteils beeinflußt und hat Auswirkung auf die Gesamtschweißzeit. Um diese Einflüsse auszugleichen wird der tatsächliche Abhebehub in einer dem eigentlichen Schweißvorgang vorausgehenden Zeitspanne gemessen und danach die Länge der Zeitspanne bestimmt, während der das Element abgehoben bleibt, damit der Kontakt des Elements mit dem Werkstück am Ende des Schweißvorgangs zu dem vorgesehenen Zeitpunkt erfolgt. Diese bekannte Vorrichtung hat den Nachteil, daß die zuvor gemessene Hubhöhe des Elements während des Schweißvorgangs nicht verändert werden kann. Eine Optimierung des Schweißprozesses durch Änderung der Hubhöhe des Elements während des Schweißvorgangs ist daher mit dieser bekannten Vorrichtung nicht möglich.

Aus der EP 0241 249 B1 (entsprechend DE-OS 36 11 823) ist es bekannt, die Schweißlichtbogenspannung zu messen und den von einem Schaltnetzteil bereitgestellten Schweißstrom in Abhängigkeit von der erfaßten Lichtbogenspannung zu steuern. Hierdurch ist es möglich, die von Schweißstelle zu Schweißstelle unterschiedlichen Schweißbedingungen auszugleichen und trotz vorgefundener ungünstiger Verhältnisse einwandfreie Verschweißungen zu erzielen.

Für die Hubbewegungen des Elementes gegenüber dem Bauteil ist eine feste Hubkurve über der Zeit vorgegeben.

Aus der WO 96/10468 ist ein weiteres Kurzzeit-Lichtbogenschweißsystem bekannt. Bei diesem System wird die Lichtbogenspannung während des Schweißvorganges auf einen Sollwert geregelt, indem die Hubhöhe des Elementes gegenüber dem Bauteil geregelt wird. Hierdurch ist es möglich, während des Schweißvorganges nicht nur den Schweißstrom sondern auch die Schweißspannung so zu regeln, daß vorgegebene Profile dieser Parameter über viele Schweißvorgänge immer wieder optimal erzielt werden.

Der Absenkvorgang erfolgt mit einer vorgegebenen Absenkgeschwindigkeit und wird zu einem bestimmten Zeitpunkt eingeleitet.

Es hat sich gezeigt, daß die oben genannten bekannten Kurzzeit-Lichtbogenschweißverfahren hinsichtlich der Konsistenz von Schweißvorgang zu Schweißvorgang noch verbesserungsfähig sind.

Es ist die Aufgabe der vorliegenden Erfindung, ein verbessertes Verfahren zum Kurzzeit-Lichtbogenschweißen bzw. ein verbessertes Kurzzeit-Lichtbogenschweißsystem anzugeben, mit denen unabhängig von den jeweiligen Schweißbedingungen jeweils optimale Schweißergebnisse erzielt werden.

Diese Aufgabe wird nach der Erfindung durch das in Anspruch 1 angegegbene Verfahren und das in Anspruch 6 angegebene Kurzzeit-Lichtbogenschweißsystem gelöst. Vorteilhafte Ausgestaltungen des Verfahrens sind in den Ansprüchen 2 bis 5 und vorteilhafte Ausgestaltungen des Kurzzeit-Lichtbogenschweißsystem sind in den Ansprüchen 7 und 8 angegeben.

Insbesondere bei Systemen, bei denen die Hubhöhe während des Schweißvorganges variabel ist, bietet die vorliegende Erfindung den Vorteil qualitativ gleichmäßigerer Schweißergebnisse.

Bei dem Lichtbogen-Schweißverfahren mit Hubhöhenregelung gemäß dem Stand der Technik können sich aufgrund des festen Zeitpunktes des Einleitens des Absenkvorganges und aufgrund der festen Vorgabe der Absenkgeschwindigkeit unterschiedliche Gesamtschweißzeiten ergeben. Dies kann von Fall zu Fall zu unterschiedlichen Schweißergebnissen führen. Hingegen wird erfindungsgemäß die vorab festgelegte Gesamtschweißzeit unabhängig von dem Verlauf der Hubhöhenregelung von Fall zu Fall immer konstant erreicht. Insgesamt können so konsistentere Schweißergebnisse trotz unterschiedlicher Randbedingungen (z.B. Oberflächenzustände) erreicht werden.

Gemäß einem weiteren Aspekt der Erfindung wird zur Erzielung konsistenterer Schweißergebnisse nicht auf eine vorab festgelegte Gesamtschweißzeit abgestellt, sondern auf eine vorab festgelegte Gesamtschweißenergie. Hierbei wird der Energieeintrag in den Schweißvorgang vorgegeben und der Zeitpunkt des Einleitens des Absenkvorganges und/oder der Absenkvorgang selbst wird in Abhängigkeit von der erfaßten Hubhöhe so gesteuert, daß die vorab festgelegte Gesamtschweißenergie erreicht wird.

In der nachstehenden Beschreibung wird generell auf die Gesamtschweißzeit abgestellt. Sämtliche Bezugnahmen hierauf sollen sich jedoch alternativ oder akkumulativ auch auf die Gesamtschweißenergien beziehen. So kann es beispielsweise Sinn machen, das Einleiten des Absenkvorganges und/oder den Absenkvorgang selbst in Abhängigkeit von der erfaßten Hubhöhe so zu steuern, daß eine vorab festgelegte Kombination von Gesamtschweißzeit und Gesamtschweißenenergie erreicht wird.

Auch ist die vorliegende Erfindung auf solche Lichtbogen-Schweißverfahren anwendbar, bei denen die Hubhöhe nicht geregelt wird, sondern auf einen im wesentlichen konstanten Wert gesteuert wird. Bei Anwendung des erfindungsgemäßen Schweißverfahrens ist es bei dieser Ausführungsform möglich, eine vorab festgelegte Gesamtschweißzeit zu erreichen, ohne daß ein Trigger-Zeitpunkt zum Einleiten des Absenkvorganges speziell vorgegeben werden muß. Vielmehr wird das erfindungsgemäße Verfahren dazu eingesetzt, die vorab festgelegte Gesamtschweißzeit zu erzielen, indem die Hubhöhe während des Schweißvorganges erfaßt wird und das Einleiten des Absenkvorganges so gesteuert wird, daß die vorab festgelegte Gesamtschweißzeit erreicht wird.

Gemäß dem in Anspruch 1 definierten Verfahren wird in Abhängigkeit von der erfaßten Hubhöhe der Zeitpunkt des Einleitens des Absenkvorganges und/oder die Absenkgeschwindigkeit gesteuert, um die vorab festgelegte Gesamtschweißzeit zu erreichen.

Durch diese beiden Parameter läßt sich auf softwaretechnisch vergleichsweise einfache Weise die vorab festgelegte Gesamtschweißzeit erreichen.

Besonders bevorzugt ist es, wenn die Absenkgeschwindigkeit unabhängig von der Hubhöhe konstant ist und wenn der Zeitpunkt des Einleitens des Absenkvorganges in Abhängigkeit von der Hubhöhe gesteuert wird, um die vorab festgelegte Gesamtschweißzeit zu erreichen.

Bei dieser Ausführungsform läßt sich die Absenkgeschwindigkeit so wählen, daß der Absenkvorgang einerseits schnell genug erfolgt, um ein Abtropfen von Schmelze von der Unterseite des Elementes zu vermeiden. Andererseits kann die Geschwindigkeit hinreichend langsam gewählt werden, um ein zu schnelles Eintauchen in die Schmelze des Bauteiles und damit ein Prellen zu vermeiden.

Je nach aktueller Hubhöhe während des Schweißvorganges wird der Absenkvorgang dann so eingeleitet, daß die vorab festgelegte Gesamtschweißzeit erreicht wird.

Gemäß einer alternativen Ausführungsform wird der Absenkvorgang zu einem vorab festgelegten Zeitpunkt eingeleitet und die Absenkgeschwindigkeit wird gesteuert, um die vorab festgelegte Gesamtschweißzeit zu erreichen.

Diese alternative Ausführungsform ist von der Programmierung her etwas leichter zu realisieren. Die Absenkgeschwindigkeit ist jedoch in Abhängigkeit von der während des Schweißvorganges jeweils eingeregelten Hubhöhe ggf. variabel.

Aus dem oben stehenden versteht sich, daß das Ziel des Erreichens einer vorab festgelegten Gesamtschweißzeit auch erreicht werden kann, indem eine Steuerung des Einleitens des Absenkvorganges und eine Steuerung des Absenkvorgangs selbst (dessen Geschwindigkeit) miteinander kombiniert werden können.

Ferner ist es auch möglich, den Absenkvorgang selbst so zu steuern, daß die Beschleunigung des Absenkens gesteuert wird. Beispielsweise kann es sinnvoll sein, das Element unmittelbar nach dem Einleiten des Absenkvorganges mit einer hohen Geschwindigkeit abzusenken und diese Geschwindigkeit allmählich zu verringern, um anschließend ein vergleichsweise sanftes Eintauchen des Elementes in die Schmelze des Bauteiles zu erreichen.

Insgesamt ist es bevorzugt, wenn die Hubhöhe während des Schweißvorganges wenigstens bis zum Einleiten des Absenkvorganges geregelt wird.

Dabei ist es besonders bevorzugt, wenn die Regelung der Hubhöhe bis zum Einleiten des Absenkvorganges dazu dient, die elektrische Spannung des Schweißlichtbogens auf einen konstanten Wert zu regeln.

Bei dem erfindungsgemäßen Kurzzeit-Lichtbogenschweißsystem ist es von Vorteil, wenn die Schweißeinrichtung einen elektrischen Motor zum Anheben und Absenken des Elementes aufweist.

Zwar ist die vorliegende Erfindung generell auch auf Schweißeinrichtungen anwendbar, die für Hubbewegungen des Elementes eine Kombination aus Elektromagnet und Feder verwenden. Aufgrund der guten Regelbarkeit von Elektromotoren und den vergleichsweise einfach erzielbaren Dämpfungsmöglichkeiten ist die Verwendung eines Elektromotors jedoch bevorzugt.

Dabei ist es von besonderem Vorteil, wenn der Motor ein Linearmotor ist. Bei dieser Ausgestaltung ist es nicht notwendig, einen Rotations-Translationswandlers für die Umsetzung der Drehbewegungen des herkömmlichen Elektromotors in Linearbewegungen des Bauteiles vorzusehen.

Ausführungsbeispiele der Erfindung sind in der Zeichnung dargestellt und werden in der nachfolgenden Beschreibung näher erläutert. Es zeigen:
- Fig. 1: eine schematische Darstellung eines erfindungsgemäßen Kurzzeit-Lichtbogenschweißsystems gemäß der vorliegenden Erfindung;
- Fig. 2: ein Diagramm mit einer Darstellung von Hubhöhe des Elements, Schweißstrom und Energieeintrag während eines Schweißvorganges über der Zeit in qualitativer Form;
- Fig. 3: eine der Fig. 2 entsprechende Darstellung der Hubhöhe bei Anwendung des erfindungsgemäßen Schweißverfahrens;
- Fig. 4: eine der Fig. 2 entsprechende Darstellung der Hubhöhe bei Anwendung einer alternativen Ausführungsform des erfindungsgemäßen Schweißverfahrens; und
- Fig. 5: eine der Fig. 2 entsprechende Darstellung der Hubhöhe bei Anwendung einer weiteren alternativen Ausführungsform des erfindungsgemäßen Schweißverfahrens.

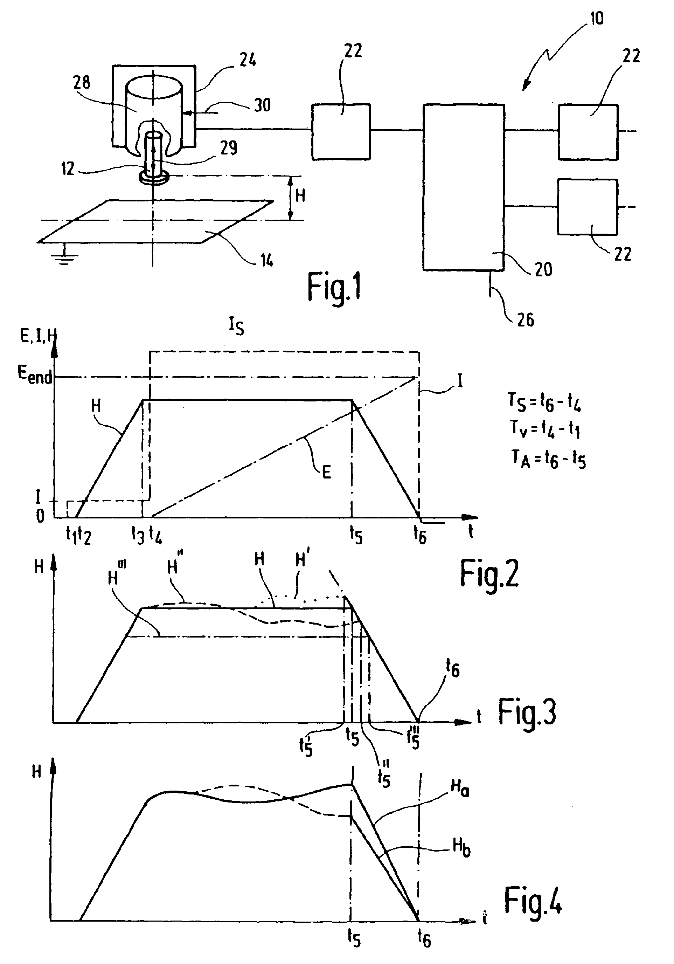

In Fig. 1 ist ein erfindungsgemäßes Kurzzeit-Lichtbogenschweißsystem generell mit 10 bezeichnet.

Das Schweißsystem 10 dient dazu, Elemente wie Metallbolzen 12 auf Bauteile wie Metallbleche 14 zu schweißen.

Ein typisches Anwendungsbeispiel ist das Schweißen von Befestigungsbolzen 12 auf das Karosserieblech 14 von Kraftfahrzeugen. Bei den Elementen kann es sich um Metallbolzen mit und ohne Gewinde, Muttern, Ösen, etc. handeln. Das Bauteil 14 kann ein Karosserieblech sein, mit Blechstärken bis hinunter zu 0,5 mm.

Das Schweißsystem 10 entspricht in seinem grundsätzlichen Aufbau dem Kurzzeit-Lichtbogenschweißsystem, das in dem eingangs genannten Prospekt "Neue TUCKER-Technologie. Bolzenschweißen mit System!" offenbart ist. Der Offenbarungsgehalt dieser Broschüre soll vorliegend durch Bezugnahme enthalten sein.

Das Schweißsystem 10 weist eine Steuer- und Energieeinheit 20 auf, an die eine Mehrzahl, typischerweise fünf Zuführeinheiten 22 anschließbar sind. An die Zuführeinheiten 22 ist jeweils wenigstens ein Schweißkopf 24 angeschlossen, von denen einer in Fig. 1 schematisch dargestellt ist.

Die Steuer- und Energieeinheit 20 weist eine Leistungsversorgungseinrichtung zum Bilden eines Lichtbogens zwischen dem Bauteil 14 und dem angehobenen Element 12 auf. Ferner weist die Steuer- und Energieeinheit eine Hauptsteuereinrichtung auf. Die Hauptsteuereinrichtung dient, über geeignete Schnittstellen, unter anderem zur Eingabe und Anzeige von Prozeßparametern und zur Kommunikation mit anderen Prozessen, beispielsweise einer Fertigungsstraße. Zum Zwecke der Kommunikation mit anderen Prozessen weist sie Steuer- und Energieeinheit 20 eine Schnittstelle 26 auf.

Die Zuführeinheiten 22 dienen zum Vereinzeln und sicheren Zuführen von Elementen wie Metallbolzen 12 zu dem Schweißkopf 24. Sie weisen jeweils eine Vereinzelungseinrichtung, einen Pneumatikteil zur Förderung vereinzelter Elemente zum Schweißkopf 24 und eine Zuführsteuereinrichtung auf.

Der Schweißkopf 24 erhält jeweils ein zu schweißendes Element 12 von der Zuführeinheit 22. Der Schweißkopf 24 weist hierzu in an sich bekannter Weise einen Halter (nicht näher dargestellt) auf. Ferner ist ein Linearmotor 28 vorgesehen, um den Halter - und damit das Element 12 - in einer Richtung etwa senkrecht zu dem Bauteil 14 linear zu bewegen, wie es schematisch bei 29 gezeigt ist.

Folglich kann mittels des elektrischen Linearmotors 28 die Höhe H des Elementes 12 gegenüber dem Bauteil 14 eingestellt werden (Hubhöhe).

Ferner weist der Schweißkopf 24 eine Hubhöhenerfassung 30 auf, die die jeweilige aktuelle Hubhöhe H erfaßt.

In Fig. 1 sind die Verbindungen zwischen der Steuer- und Energieeinheit 20 und der Zuführeinheit 22 sowie zwischen der Zuführeinheit 22 und dem Schweißkopf 24 jeweils als einzelne Linie gezeigt. Es versteht sich jedoch, daß diese Verbindungen jeweils Kommunikationsleitungen beinhalten, zum Austausch von Information und zur Übermittlung von Steuerbefehlen zwischen den Steuereinrichtungen der Steuer- und Energieeinheit 20, der jeweiligen Zuführeinheiten 22 sowie der jeweiligen Schweißköpfe 24.

Ferner beinhalten die Verbindungen Leistungsversorgungsleitungen, um den Schweißkopf 24 mit Leistung aus der Leistungsversorgungseinrichtung der Steuer- und Energieeinheit 20 zu versorgen. Ferner beinhaltet die Verbindung zwischen der Zuführeinheit 22 und dem Schweißkopf 24 eine Druckluftleitung zum Zuführen von aufzuschweißenden Elementen 12.

Bei Bereitstellen einer Weiche (nicht dargestellt) können an eine Zuführeinheit 22 auch zwei oder ggf. sogar noch mehr Schweißköpfe 24 angeschlossen werden.

Bei den Schweißköpfen 24 kann es sich um fest montierbare Schweißköpfe handeln, die beispielsweise fest an einem Roboterarm angebracht sind, oder um frei handhabbare Schweißpistolen.

Die Zuführeinheiten 22 und die Schweißköpfe 24 können jeweils an unterschiedliche Arten von Elementen 12 angepaßt sein, und zwar sowohl hinsichtlich der Stoffeigenschaften (beispielsweise Stahl- oder Aluminiumbolzen) und hinsichtlich der Form (Tannenbaumbolzen, Massebolzen, Gewindebolzen, etc.).

Das dargestellte Schweißsystem 10 stellt lediglich eine bevorzugte Ausführungsform für den Einsatz im industriellen Feld dar. Es versteht sich, daß andere Ausführungsformen ohne eine spezielle Zuführeinheit ausgebildet sein könnten, wobei die aufzuschweißenden Elemente 12 dann von Hand in einen.Halter eingesetzt werden.

Der Betrieb des Schweißsystems 10 wird im folgenden generell anhand von Fig. 2 erläutert.

In Fig. 2 sind über der Zeit t aufgetragen die Hubhöhe H des Elementes 12 gegenüber dem Bauteil 14, der Schweißstrom I, der von der Steuer- und Energieeinheit 20 über die Zuführeinheit 22 und den Schweißkopf 24 durch den Bolzen 12 und das Bauteil 14 fließt, und die in die Schweißverbindung eingetragene Energiemenge E.

Die Darstellung dieser Variablen ist rein qualitativer und schematischer Natur, um deren Erläuterung zu vereinfachen.

Beim Durchführen eines Schweißvorganges wird zunächst das Element 12 auf das Bauteil 14 aufgesetzt, so, daß ein elektrischer Kontakt entsteht. Anschließend wird zu einem Zeitpunkt t₁ ein sogenannter Vorstrom Iᵥ eingeschaltet. Kurz hier nach, zu einem Zeitpunkt t₂, wird das Element 12 gegenüber dem Bauteil 14 angehoben, bis zu einem Zeitpunkt t₃, bei dem die Schweißhubhöhe erreicht ist. Während dieser Zeit bleibt der Vorstrom eingeschaltet. Es wird während des Abhebens des Bauteiles 12 ein Lichtbogen gezogen. Der Vorstrom-Lichtbogen hat hinreichend Energie, um im Bereich der Schweißstelle vorhandene Verunreinigungen abzubrennen oder eventuelle Wachsschichten zu verdampfen.

Nach dem Erreichen der Schweißhubhöhe wird zum Zeitpunkt t₄ der Schweißstrom Iₛ zugeschaltet. Durch den hohen Schweißstrom Iₛ in der Größenordnung von beispielsweise 20 A bis 1500 A werden das Element 12 und das Bauteil 14 im Bereich des gezogenen Lichtbogens angeschmolzen. Die in den Schweißvorgang einfließende Energie E steigt an.

Zu einem Zeitpunkt t₅ wird der Absenkvorgang eingeleitet. Das Element 12 wird mit einer vorbestimmten Geschwindigkeit abgesenkt, bis es zu einem Zeitpunkt t₆ auf das Bauteil 14 auftrifft. Zu diesem Zeitpunkt wird der Lichtbogen kurzgeschlossen und der Schweißstrom Iₛ wird abgeschaltet. Wie es in Fig. 2 qualitativ dargestellt ist, kann der Absenkvorgang bis leicht unter die Nullinie erfolgen, um ein sattes Eintauchen des Elementes 12 in die angeschmolzene Oberfläche des Bauteiles 14 zu gewährleisten.

Die Schmelzen von Element 12 und Bauteil 14 vereinigen sich und erkalten aufgrund der Unterbrechung des Energieeintrags. Die insgesamt eingetragene Energiemenge ist in Fig. 2 mit E_{end} bezeichnet.

Das Element 12 ist somit fest auf das Bauteil 14 geschweißt und kann als Anker zur Befestigung von Teilen an dem Bauteil 14 dienen.

In Fig. 2 ist ferner die Gesamtschweißzeit Tₛ gezeigt, nämlich die Zeit von t₄ bis t₆.

Die Vorstromzeit Tᵥ ist als die Zeit von t₁ bis t₄ gezeigt.

Schließlich ist eine Absenkzeit T_{A} als die Zeit von t₅ bis t₆ erkennbar.

Der in Bezug auf Fig. 2 beschriebene Schweißvorgang entspricht dem Stand der Technik. Zum Anheben und Absenken des Elementes 12 kann entweder ein Linearmotor oder ein FederMasse-System (mit Elektromagnet und Gegenfeder) verwendet werden.

Insbesondere bei Verwendung des elektrischen Linearmotors 28 läßt sich die Hubhöhe H regeln, indem ein bestimmtes Sollprofil für den Hubverlauf vorgegeben wird und die gemessene Hubhöhe H auf das jeweilige Sollprofil rückgeführt wird. Hierdurch ist eine genaue Lagedefinition zwischen Element 12 und Bauteil 14 zu jedem Zeitpunkt des Schweißvorganges möglich.

Der Strom I wird aus einer Konstantstromquelle der Leistungsversorgungseinrichtung der Steuer- und Energieeinheit 20 zur Verfügung gestellt. Die Lichtbogenspannung zwischen Element 12 und Bauteil 14 stellt sich folglich gemäß dem zwischen diesen beiden Elementen vorliegenden elektrischen Widerstand ein. Der elektrische Widerstand hängt maßgeblich von Oberflächenbeschaffenheit, Verunreinigungen, etc. ab und kann von Schweißvorgang zu Schweißvorgang variieren.

Aus der eingangs genannten WO 96/10468 ist es daher bekannt, die Hubhöhe H während des Schweißvorganges so zu regeln, daß die Lichtbogenspannung zwischen dem Element 12 und dem Bauteil 14 konstant ist bzw. einem vorgegebenen fertigen Profil folgt.

Durch dieses System ist es möglich, die Lichtbogenspannung während des Schweißvorganges konstant zu halten, um so geringere Fluktuationen der Schweißqualität von Schweißvorgang zu Schweißvorgang zu erhalten. Details des Regelvorganges sind offenbart in der WO 96/10468, deren Offenbarung vorliegend durch Bezugnahme voll umfänglich enthalten sein soll. In dieser Druckschrift ist auch beschrieben, daß der Absenkvorgang mit einer bestimmten Absenkgeschwindigkeit erfolgt, die vorab eingestellt wird.

Dies kann bei dem Stand der Technik dazu führen, daß die Gesamtschweißzeit Tₛ von Schweißvorgang zu Schweißvorgang variiert. Denn falls beispielsweise in der Darstellung der Fig. 2 die Hubhöhe H zum Zeitpunkt t₅ größer ist als dargestellt, verschiebt sich der Zeitpunkt t₆ zeitlich nach hinten, da die Absenkgeschwindigkeit konstant ist. Folglich verlängert sich auch die Gesamtschweißzeit Tₛ. Falls die Hubhöhe hingegen aufgrund der Hubhöhenregelung zur Einstellung der Lichtbogenspannung zum Zeitpunkt t₅ kleiner ist als in Fig. 2 dargestellt, verschiebt sich der Zeitpunkt t₆ zeitlich nach vorne, was zu einer Verkürzung der Gesamtschweißzeit Tₛ. führt. Es versteht sich, daß entsprechend auch der Energieeintrag E sich je nach Hubhöhe H zum Zeitpunkt t₅ verändert.

Eine bevorzugte Ausführungsform des erfindungsgemäßen Lichtbogenschweißverfahrens ist in Fig. 3 dargestellt.

In Fig. 3 ist zum einen als Referenz das Profil der Hubhöhe H dargestellt wie es auch in Fig. 2 gezeigt ist. Um eine konstante Gesamtschweißzeit Tₛ zu erreichen, wird, bei ansonsten unveränderten Randbedingungen, der Schweißvorgang bei t₆ beendet, unabhängig von der während des Schweißvorganges aufgrund von Regelungen zuletzt eingestellten Hubhöhe H.

Falls das Element 12 zur Lichtbogenspannungsregelung beispielsweise im Verlauf des Schweißvorganges angehoben wird, wie es schematisch bei H' gezeigt ist, erfolgt, eine konstante Absenkgeschwindigkeit vorausgesetzt, das Einleiten des Absenkvorganges bereits zu einem Zeitpunkt t₅', der vor dem Zeitpunkt t₅ liegt.

Wenn hingegen sich während der Regelung eine niedrigere Hubhöhe einstellt, wie es schematisch bei H" gezeigt ist, wird der Absenkvorgang erst zu einem Zeitpunkt t₅" eingeleitet, der zeitlich nach dem Zeitpunkt t₅ liegt.

Das Festhalten an einer konstanten Absenkgeschwindigkeit ausgehend vom Einleiten des Absenkvorganges bis hin zum Zeitpunkt t₆ hat folgende Vorteile. Die Absenkgeschwindigkeit kann einerseits hoch genug gewählt werden, um ein Abtropfen von Schmelze von dem Element 12 auf das Bauteil 14 vor dem Eintauchen zu vermeiden. Andererseits kann die Absenkgeschwindigkeit hinreichend klein gewählt werden, um ein hartes Aufprallen auf das Bauteil 14 zu vermeiden, was zu einem Prellen und Wegspritzen von Schmelze führen könnte.

Der Wert der fest vorgegebenen Absenkgeschwindigkeit ist bei dieser Ausführungsform folglich ein Kompromiß zwischen diesen beiden Randbedingungen.

In Fig. 3 ist ferner gezeigt, daß das erfindungsgemäße Schweißverfahren auch dann Anwendung finden kann, wenn die Hubhöhe H nicht geregelt wird.

Es kann jedoch sein, daß für unterschiedliche Anwendungsfälle unterschiedliche Hubhöhen während des Schweißvorganges gewünscht sind, wie es in Fig. 3 durch H einerseits und H"' andererseits zeigt ist.

Herkömmlich müßte nun für die unterschiedlichen Hubhöhen H, H"' jeweils ein unterschiedlicher Abschaltzeitpunkt t₅ bzw. t₅"' programmiert werden. Durch das erfindungsgemäße Verfahren wird der richtige Zeitpunkt t₅ bzw. t₅"' automatisch anhand der erfaßten Hubhöhe gewählt, so daß sich eine spezielle Programmierung dieses Zeitpunktes erübrigt.

In Fig. 4 ist eine alternative Ausführungsform des erfindungsgemäßen Schweißverfahrens gezeigt.

Bei dieser Ausführungsform erfolgt die Regelung der Hubhöhe immer bis zu einem festen Zeitpunkt t₅, unabhängig von der zu diesem Zeitpunkt vorliegenden Hubhöhe Hₐ bzw. H_{b}.

Um dennoch eine fest vorgegebene Gesamtschweißzeit zu erzielen, wird die Geschwindigkeit des Absenkvorganges so gewählt, daß der Absenkvorgang immer zu einem Zeitpunkt t₆ endet. So ist in dem in Fig. 4 dargestellten Beispiel die Hubhöhe bei der Kurve Hₐ zum Zeitpunkt t₅ relativ hoch. Folglich muß eine relativ hohe Geschwindigkeit eingestellt werden, um den Gesamtschweißvorgang zum Zeitpunkt t₆ zu beenden.

Wenn andererseits die Hubhöhe zum Zeitpunkt t₅ relativ klein ist, wie es bei der Kurve H_{b} gezeigt ist, ist die zu wählende Geschwindigkeit zum Erreichen der Gesamtschweißdauer relativ gering.

Diese alternative Ausführungsform des erfindungsgemäßen Verfahrens ist etwas einfacher zu programmieren. Die Ausführungsform der Fig. 3 hat demgegenüber den Vorteil einer einheitlichen Absenkgeschwindigkeit und damit eines definierten Eintauchvorganges.

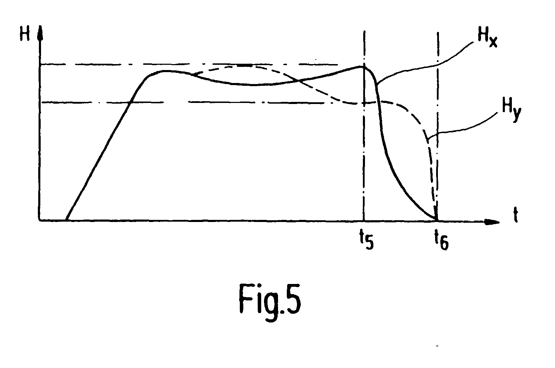

Eine weitere Ausführungsform des erfindungsgemäßen Verfahrens ist in Fig. 5 dargestellt.

Bei dieser Ausführungsform ist es, ähnlich der Ausführungsform der Fig. 4, so, daß die Regelung der Hubhöhe während des Schweißvorganges immer bis zu dem Zeitpunkt t₅ erfolgt.

Um anschließend eine konstante Gesamtschweißzeit Tₛ zu erzielen, wird nicht nur auf die Geschwindigkeit des Absenkvorganges Einfluß ausgeübt, sondern auch auf dessen Beschleunigung. So ist es beispielsweise anhand des Hubhöhenverlaufs Hₓ zu erkennen, daß die Hubhöhe direkt nach dem Zeitpunkt t₅ zunächst mit einer relativ hohen Geschwindigkeit verringert wird und die Geschwindigkeit im Verlauf des Annäherns an den Zeitpunkt t₆ kontinuierlich verringert wird, um einen sanften Eintauchvorgang zu erzielen.

Es versteht sich, daß diese Art von Einflußnahme auf den Absenkvorgang auch bei der Ausführungsform der Fig. 3 angewendet werden kann, indem statt einer kontinuierlichen Absenkgeschwindigkeit ein bestimmtes Weg-Zeit-Profil des Absenkvorganges vorgegeben wird, das beispielsweise die Form einer Parabel annehmen kann, wie es in Fig. 5 dargestellt ist.

In Fig. 5 ist eine weitere Hubkurve H_{y} gezeigt, bei der der Absenkvorgang ebenfalls zu einem Zeitpunkt t₅ eingeleitet und zu einem Zeitpunkt t₆ beendet wird. Bei dieser Ausführungsform wird zum Erzielen eines besonders harten Aufpralles auf das Bauteil 14 die Hubhöhe nach dem Einleiten des Absenkvorganges zum Zeitpunkt t₅ noch vergleichsweise hoch gehalten, und das Element 12 wird dann mit Annäherung an den Zeitpunkt t₆ auf das Bauteil 14 zu beschleunigt.

Ferner versteht sich, daß das erfindungsgemäße Verfahren auch anwendbar ist auf solche Kurzzeit-Lichtbogenschweißverfahren, bei denen der Lichtbogen nicht "gezogen" wird.

## Patentansprüche

1. Verfahren zum Kurzzeit-Lichtbogenschweißen von Elementen (12), wie z.B. Metallbolzen (12), auf Bauteile (14), wie z.B. Metallbleche (14), bei dem ein Element (12) im Rahmen eines Schweißvorganges zunächst gegenüber dem Bauteil (14) angehoben wird, ein Schweißlichtbogen zwischen Element (12) und Bauteil (14) gebildet wird und das Element (12) wieder abgesenkt wird, wobei die Hubhöhe (H) des Elements (12) gegenüber dem Bauteil (14) wenigstens in einem zeitlichen Abschnitt zwischen Anheben und Absenken des Elementes (12) erfaßt wird, **dadurch gekennzeichnet, daß** die Hubhöhe (H) des Elements (12) gegenüber dem Bauteil (14) während des Schweißvorgangs erfaßt wird, und daß der Zeitpunkt (t₅) des Einleitens des Absenkvorganges und/oder die Geschwindigkeit des Absenkvorgangs in Abhängigkeit von der aktuellen erfaßten Hubhöhe (H) zu diesem Zeitpunkt (t₅) des Einleitens des Absenkvorgangs so gesteuert wird, daß eine vorab festgelegte Gesamtschweißzeit (Tₛ) und/oder eine vorab festgelegte Gesamtschweißenergie (E_{end}) erreicht wird.

2. Verfahren nach Anspruch 1, **dadurch gekennzeichnet, daß** die Absenkgeschwindigkeit unabhängig von der Hubhöhe (H) konstant ist und daß der Zeitpunkt (t₅) des Einleitens des Absenkvorganges in Abhängigkeit von der Hubhöhe (H) zu diesem Zeitpunkt (t₅) gesteuert wird.

3. Verfahren nach Anspruch 1, **dadurch gekennzeichnet, daß** der Absenkvorgang zu einem vorab festgelegten Zeitpunkt (t₅) eingeleitet wird und daß die Absenkgeschwindigkeit gesteuert wird.

4. Verfahren nach einem der Ansprüche 1 - 3, **dadurch gekennzeichnet, daß** die Hubhöhe (H) während des Schweißvorganges wenigstens bis zum Einleiten des Absenkvorganges geregelt wird.

5. Verfahren nach Anspruch 4, **dadurch gekennzeichnet, daß** die Regelung der Hubhöhe bis zum Einleiten des Absenkvorganges dazu dient, die elektrische Spannung des Schweißlichtbogens auf einen konstanten Wert zu regeln.

6. Kurzzeit-Lichtbogenschweißsystem (10) zum Schweißen von Elementen (12), wie z.B. Metallbolzen (12), auf Bauteile (14), wie z.B. Metallbleche (14), mit
- einer Schweißeinrichtung (24), die ein Element (12) im Rahmen eines Schweißvorganges zunächst gegenüber dem Bauteil (14) anhebt und wieder absenkt,
- einer Hubhöhenerfassungseinrichtung (30) zum Erfassen der Hubhöhe (H) des Elementes (12) gegenüber dem Bauteil (14) wenigstens in einem zeitlichen Abschnitt zwischen Anheben und Absenken des Elements (12), und
- einer Leistungsversorgungseinrichtung (20), die Leistung zum Bilden eines Lichtbogens zwischen dem Bauteil (12) und dem angehobenen Element (14) bereitstellt,
- einer Steuereinrichtung, die die Schweißeinrichtung (24) zum Anheben und Absenken des Elementes (12) ansteuert,
**dadurch gekennzeichnet, daß**
die Hubhöhenerfassungseinrichtung (30) die Hubhöhe (H) des Elements (12) gegenüber dem Bauteil (14) während des Schweißvorgangs erfaßt und
die Steuereinrichtung die Schweißeinrichtung (24) so ansteuert, daß der Zeitpunkt (t₅) des Einleitens des Absenkvorgangs und/oder die Geschwindigkeit des Absenkvorgangs in Abhängigkeit von der aktuellen erfaßten Hubhöhe (H) zum dieser Zeitpunkt (t₅) des Einleitens des Absenkvorgangs so erfolgt, daß eine vorab festgelegte Gesamtschweißzeit (Tₛ) und/oder eine vorab festgelegte Gesamtschweißenergie (E_{end}) erreicht wird.

7. System nach Anspruch 6, **dadurch gekennzeichnet, daß** die Schweißeinrichtung (24) einen elektrischen Motor (28) zum Anheben und Absenken des Elementes (12) aufweist.

8. System nach Anspruch 7, **dadurch gekennzeichnet, daß** der Motor (28) ein Linearmotor (28) ist.

## Claims

1. Process for short-time arc welding elements (12), such as for example metal studs (12), onto components (14), such as for example metal sheets (14), wherein an element (12) in the context of a welding operation is initially raised in relation to the component (14), a welding arc is formed between the element (12) and the component (14), and the element (12) is lowered again, the lifting height (H) of the element (12) in relation to the component (14) being detected at least within a time segment between raising and lowering of the element (12),
**characterised in that** the lifting height (H) of the element (12) in relation to the component (14) is detected during the welding process and that the time (t₅) of initiation of the lowering operation and/or the speed of the lowering operation is controlled as a factor of the current detected lifting height (H) at this time (t₅) of initiation of the lowering operation such that a previously specified total welding time (Tₛ) and/or a previously specified total welding energy (E_{end})is achieved.

2. Process according to claim 1, **characterised in that** the lowering speed is constant irrespective of the lifting height (H) and that the time (t₅) of initiation of the lowering operation is controlled as a factor of the lifting height (H).

3. Process according to claim 1, **characterised in that** the lowering operation is initiated at a previously specified time (t₅) and that the lowering speed is controlled.

4. Process according to any of claims 1 to 3, **characterised in that** the lifting height (H) during the welding operation is regulated at least until the initiation of the lowering operation.

5. Process according to claim 4, **characterised in that** the regulation of the lifting height until initiation of the lowering operation serves to regulate the electrical voltage of the welding arc to a constant value.

6. Short-time arc welding system (10) for welding elements (12), such as for example metal studs (12), on to components (14), such as for example metal sheets (14), with
- a welding device (24) which in the context of a welding operation initially raises an element (12) in relation to the component (14) and lowers said element again,
- a lifting height detection device (30) for detecting the lifting height (H) of the element (12) in relation to the component (14) at least within a time segment between raising and lowering of the element (12), and
- a power supply device (20) which provides power for forming an arc between the component (14) and the raised element (12),
- a control device which triggers the welding device (24) for raising and lowering the element (12), **characterised in that**
the lifting height detection device (30) detects the lifting height (H) of the element (12) in relation to the component (14) during the welding operation and
the control device triggers the welding device (24) such that the time (t₅) of initiation of the lowering operation and/or the speed of the lowering operation takes place as a factor of the current detected lifting height (H) such that a previously specified total welding time (Tₛ) and/or a previously specified welding energy (E_{end}) is achieved.

7. System according to claim 6, **characterised in that** the welding device (24) has an electric motor (28) for raising and lowering the element (12).

8. System according to claim 7, **characterised in that** the motor (28) is a linear motor (28).

## Revendications

1. Procédé de soudage à l'arc de courte durée d'éléments (12), par exemple des boulons métalliques (12), sur des pièces (14), par exemple des tôles métalliques (14), dans lequel un élément (12) est d'abord soulevé par rapport à la pièce (14) dans le cadre d'un procédé de soudage, un arc de soudage est formé entre l'élément (12) et la pièce (14) et l'élément (12) est à nouveau abaissé, la hauteur de levage (H) de l'élément (12) par rapport à la pièce (14) étant enregistrée au moins dans une période de temps comprise entre le levage et l'abaissement de l'élément (12), **caractérisé en ce que** la hauteur de levage (H) de l'élément (12) par rapport à la pièce (14) est enregistrée au cours de l'opération de soudage et **en ce que** le moment (t₅) du déclenchement de l'opération d'abaissement et/ou la vitesse de l'opération d'abaissement est/sont commandés en fonction de la hauteur de levage courante enregistrée (H) au moment (t₅) du déclenchement de l'opération d'abaissement de manière à atteindre un temps de soudage total fixé à l'avance (Tₛ) et/ou une énergie de soudage totale fixée à l'avance (E_{end}).

2. Procédé selon la revendication 1, **caractérisé en ce que** la vitesse d'abaissement est constante indépendamment de la hauteur de levage (H) et **en ce que** le moment (t₅) du déclenchement de l'opération d'abaissement est commandé en fonction de la hauteur de levage (H) à ce moment (t₅) .

3. Procédé selon la revendication 1, **caractérisé en ce que** l'opération d'abaissement est déclenchée à un moment fixé à l'avance (t₅) et **en ce que** la vitesse d'abaissement est commandée.

4. Procédé selon l'une quelconque des revendications 1 à 3, **caractérisé en ce que** la hauteur de levage (H) pendant l'opération de soudage est au moins réglée jusqu'au déclenchement de l'opération d'abaissement.

5. Procédé selon la revendication 4, **caractérisé en ce que** le réglage de la hauteur de levage jusqu'au déclenchement de l'opération d'abaissement sert à régler la tension électrique de l'arc de soudage à une valeur constante.

6. Système de soudage à l'arc de courte durée (10) pour souder des éléments (12), par exemple des boulons métalliques (12), sur des pièces (14), par exemple des tôles métalliques (14), comprenant
- un dispositif de soudage (24) qui soulève tout d'abord, dans le cadre d'une opération de soudage, un élément (12) par rapport à la pièce (14) et l'abaisse à nouveau;
- un dispositif d'enregistrement de la hauteur de levage (30) pour enregistrer la hauteur de levage (H) de l'élément (12) par rapport à la pièce (14) au moins dans une période de temps comprise entre le levage et l'abaissement de l'élément (12); et
- un dispositif d'alimentation en énergie (20), qui fournit de l'énergie pour former un arc électrique entre la pièce (12) et l'élément soulevé (14),
- un dispositif de commande, qui commande le dispositif de soudage (24) pour soulever et abaisser l'élément (12),
**caractérisé en ce que**
le dispositif d'enregistrement de la hauteur de levage (30) enregistre la hauteur de levage (H) de l'élément (12) par rapport à la pièce (14) pendant l'opération de soudage et
le dispositif de commande commande le dispositif de soudage (24) de manière que le moment (t₅) du déclenchement de l'opération d'abaissement et/ou la vitesse de l'opération d'abaissement soient fonction de la hauteur de levage courante enregistrée (H) au moment (t₅) du déclenchement de l'opération d'abaissement de manière à atteindre un temps de soudage total fixé à l'avance (Tₛ) et/ou une énergie de soudage totale fixée à l'avance (E_{end}).

7. Système selon la revendication 6, **caractérisé en ce que** le dispositif de soudage (24) présente un moteur électrique (28) pour soulever et abaisser l'élément (12).

8. Système selon la revendication 7, **caractérisé en ce que** le moteur (28) est un moteur linéaire (28).
